# EUROPÄISCHE PATENTSCHRIFT

(11) **EP 0 619 347 B1**
(45) Veröffentlichungstag und Bekanntmachung des Hinweises auf die Patenterteilung: **04.09.1996**
(21) Anmeldenummer: 93105766.5
(22) Anmeldetag: 07.04.1993
(51) Int. Cl.: C09D 4/00

(54) **(Meth-)Acrylat-Beschichtungsmassen**
(Meth-)acrylic coatings
Revêtements (méth-)acryliques

(43) Veröffentlichungstag der Anmeldung: 12.10.1994
(73) Patentinhaber: PCI Augsburg GmbH, D-86159 Augsburg (DE)
(72) Erfinder: Huber, Manfred, W-8900 Augsburg (DE); Frenkenberger, Karl, W-8900 Augsburg (DE); Heichele, Thomas, W-8900 Augsburg (DE)
(74) Vertreter: Hansen, Bernd, Dr. Dipl.-Chem.

(56) Entgegenhaltungen:
- EP-A- 0 069 944
- EP-A- 0 092 401
- US-A- 4 218 294

## Beschreibung

Die vorliegende Erfindung betrifft leichtverlaufende, radikalisch härtbare Beschichtungsmassen auf Basis von (Meth-)Acrylatmonomeren und/oder -oligomeren, die zusätzlich Mikrohohlkörper enthalten. Diese Beschichtungsmassen härten auch unter ungünstigen Bedingungen leicht und störungsfrei aus.

Radikalisch härtende Beschichtungsmassen auf Basis olefinisch ungesättigter Monomere sind bekannt und werden in großem Umfang zur Beschichtung von Betonflächen, Estrichflächen, Stahlflächen, Keramikflächen, Bitumen- und Asphaltflächen und dergleichen eingesetzt. Die damit versehenen Flächen erhalten eine größere Widerstandsfähigkeit gegen mechanische und chemische Belastungen sowie gegen Umwelteinflüsse. Zur Herstellung solcher Beschichtungen werden allgemein Beschichtungsmassen, die Monomere und/oder Oligomere von Acrylaten bzw. (Meth-)Acrylaten als Bindemittel sowie zusätzlich Füllstoffe, Pigmente und/oder Additive enthalten, in Gegenwart von Radikalbildnern unter Polymerisation gehärtet.

Da diese Härtung durch Sauerstoff inhibiert wird, wurden solchen Systemen häufig Wachse, insbesondere Paraffin, zugesetzt, die während der Härtungsphase an der Oberfläche einen Schutzfilm ausbilden. In letzter Zeit zeigte sich jedoch zunehmend, daß ein solcher Wachsfilm nicht in jedem Fall eine ausreichend rasche und vollständige Aushärtung der Beschichtungsmasse gewährleistet. Vielmehr zeigten solche wachshaltigen Beschichtungsmassen häufig klebrige, nicht vollständig ausgehärtete Oberflächen. Ferner wurde beobachtet, daß solche mangelhaften Oberflächen insbesondere dann auftraten, wenn die frisch aufgetragenen Beschichtungsmassen nicht ausreichend belüftet wurden.

Die vorliegende Erfindung zielt demzufolge daraufhin ab, Beschichtungsmassen zu entwickeln, welche auch unter ungünstigen Bedingungen, d.h. bei schlechter Lüftung und unzureichender Luftzirkulation, vollständig aushärten und zu nicht-klebrigen Oberflächen mit einem einheitlichen Aussehen führen. Eine weitere Aufgabe der vorliegenden Erfindung ist es, rutschfeste Beschichtungen, insbesondere auf Beton- oder Stahlflächen, zu bilden, die auch bei niedriger Temperatur (-5°C bis +5°C) störungsfrei aushärten.

Diese Aufgaben werden durch die Beschichtungsmassen nach Anspruch 1 und das Verfahren nach Anspruch 7 gelöst.

Weitere Ausgestaltungen der vorliegenden Erfindung sind Inhalt der Unteransprüche.

Im Verlaufe von Untersuchungen zur Fragestellung, wie die Probleme von Beschichtungen des Standes der Technik vermieden werden können, wurde gefunden, daß Beschichtungen, welche zusätzlich Mikrohohlkörper in mindestens einer Menge enthalten, die zur Bildung einer Schicht an der Oberfläche einer aus der Beschichtungsmasse gebildeten Beschichtung ausreicht, auch dann ein ausgezeichnetes Härtungsverhalten zeigen, wenn die zu beschichtende Fläche nicht ausreichend belüftet werden kann bzw. wenn nicht für hinreichende Luftzirkulation gesorgt wird. Selbst unter diesen ungünstigen Bedingungen härten die radikalisch härtbaren Beschichtungsmassen gemäß der vorliegenden Erfindung kleb- und störungsfrei aus und zeigen ein einheitliches einwandfreies Aussehen.

Im Rahmen der vorliegenden Erfindung wird unter der "Oberfläche der Beschichtung" stets die zur Luft hin gerichtete Oberfläche der Beschichtung verstanden.

Die erfindungsgemäßen Beschichtungsmassen enthalten als Bindemittel die Ester von 1 bis 8 C-Atome aufweisenden Alkoholen der Acryl- bzw. Methacrylsäure, deren Gemische sowie gegebenenfalls Oligomere von entsprechenden Acrylaten und/oder Methacrylaten. Als Alkohole, die mit Acryl- bzw. Methacrylsäure verestert sein können, können beliebige Alkohole verwendet werden, insbesondere lineare Alkohole wie Methanol, Ethanol, Propanol, Butanol, Pentanol, Hexanol, Heptanol und Octanol sowie verzweigte Alkohole wie Isopropanol, Isoamylalkohol, und Ethylhexylalkohol. Unter diesen sind Methanol und 2-Ethylhexanol besonders bevorzugt.

Acrylsäureester und Methacrylsäureester sind im Rahmen der Erfindung gleichermaßen alleine oder als Mischung verwendbar, wobei handelsübliche Gemische aus Acrylsäureestern und Methacrylsäureestern, wie etwa ein Gemisch aus Methylmethacrylat und Ethylhexylacrylat besonders bevorzugt werden. Der Bindemittelgehalt in der Beschichtungsmasse der Erfindung liegt zwischen 10 und 95 Gew.%, wobei aus Kostengründen niedrigere Bindemittelgehalte, wie etwa 10 bis 65 Gew.% und insbesondere 10 bis 50 Gew.%, bezogen auf die gesamte Beschichtungsmasse, bevorzugt sind. Ebenfalls eingesetzt werden können im Rahmen der Erfindung anpolymerisierte Mischungen, die aus den oben erwähnten Monomeren gebildet wurden. Mithin kann eine Beschichtungsmasse der vorliegenden Erfindung auch Oligomere auf Basis von Estern der (Meth-)Acrylsäure enthalten. Darüber hinaus können die erfindungsgemäßen Beschichtungsmassen auch polymere (Meth-)Acrylate enthalten. Die Beschichtungsmassen sind vorzugsweise leicht verlaufend, so daß sie sich leicht auf eine Fläche auftragen lassen. Das heißt, daß die Viskosität der gesamten Beschichtungsmasse vorzugsweise 200 bis 20000 mPa·s, insbesondere 2000 bis 8000 mPa·s betragen sollte (gemessen mit Spindel 5, Brookfield, 50 U/min).

Als Füllstoffe werden im Rahmen der Erfindung übliche Füllstoffe eingesetzt, vorzugsweise Quarzsande, Quarzmehle, Calcite, Kreiden, Schwerspate, Feldspate und Talke. Auch andere Füllstoffe sind denkbar, soweit sie nicht die Polymerisationseigenschaften der Beschichtungsmasse nachteilig beeinflussen. Während es denkbar ist, den Effekt der vorliegenden Erfindung in einer Beschichtungsmasse zu erzielen, die ganz frei von Füllstoffen und weiteren Zuschlägen ist, so ist es doch aus Kostengründen und zur Beeinflussung der mechanischen Eigenschaften bevorzugt, daß die Beschichtungsmasse möglichst viel Füllstoffe enthält, d.h. vorzugsweise zwischen 5 und 90 Gew.%, insbesondere zwischen 50 und 90 Gew.%.

Ferner kann die Beschichtungszusammensetzung vorteilhaft Pigmente enthalten. Als Pigmente kommen beispielsweise handelsübliche Eisenoxide, Titanoxide und Farbsande in Betracht. Die Wahl anderer Pigmente ist möglich, soweit sie nicht die Polymerisationseigenschaften der erfindungsgemäßen Beschichtungsmasse negativ beeinflussen.

Das Pigment kann beispielsweise in einer Menge von 0,5 bis 90 Gew.%, vorzugsweise von 1 bis 60 Gew.%, vorliegen. Insbesondere preiswerte Pigmente, wie z.B. Farbsande, können auch als Füllstoffe angesehen und verwendet werden.

Der Zusatz weiterer Stoffe (Additive) zu den erfindungsgemäßen radikalisch härtenden Beschichtungsmassen ist ebenfalls möglich. Als solche Additive können Paraffine, Weichmacher, Inhibitoren, Entlüfter, Netzmittel, Dispergiermittel und Antiausschwimmittel enthalten sein. Insbesondere ist der Zusatz von Paraffinen bevorzugt. Als Additive in den Beschichtungsmassen der vorliegenden Erfindung können aber auch weitere organische Monomere, wie ungesättigte Vinylester von 2 bis 8 C-Atomen aufweisenden Monoalkancarbonsäuren, enthalten sein. Die Additive können bevorzugt in relativ kleinen Mengen, beispielsweise 0 bis 5 Gew.%, bevorzugt 0,01 bis 3 Gew.%, vorliegen. Die Gesamtmenge von Additiven, Füllstoffen und Pigmenten sollte vorzugsweise 90 Gew.% nicht überschreiten.

Erfindungsgemäß enthalten die Beschichtungsmassen Mikrohohlkörper, wobei sie bezüglich der Auswahl dieser Mikrohohlkörper nicht besonders beschränkt ist. In Frage kommen beispielsweise Glashohlkugeln, Kunststoffmikrohohlkugeln beispielsweise aus Polyvinylchlorid oder Polyethylen, gefüllte Kunststoffhohlkörper, Borsilikathohlkörper, Aluminiumsilikathohlkörper, Glashohlkugeln mit gefüllten Kunststoffhohlkugeln und deren Mischungen. Besonders bevorzugt sind kugelförmige oder näherungsweise kugelförmige Hohlkörper aus Borsilikat und/oder Aluminiumsilikat. Die Mikrohohlkörper haben eine durchschnittliche Teilchengröße von 10 bis 200 µm. Unter "Mikrohohlkörpern" im Sinne der Erfindung wird verstanden, daß die Körper mit einer Substanz gefüllt sind, die bewirkt, daß die Hohlkörper insgesamt spezifisch leichter sind als die restliche Beschichtungsmasse.

Insbesondere enthalten die Mikrohohlkörper der vorliegenden Erfindung eine gasförmige Füllung, wie etwa Stickstoff oder Luft.

Die Mikrohohlkörper sollten mindestens in einer Menge vorliegen, die zur Bildung einer Schicht an der Oberfläche einer aus der Beschichtungsmasse gebildeten Beschichtung ausreicht. Diese Oberflächenschicht aus Mikrohohlkörpern sollte hinreichend dicht sein, um den Zutritt von Sauerstoff aus der Umgebungsluft zur polymerisierenden Beschichtungsmasse weitgehend zu verhindern. Die sich bildende Mikrohohlkörperschicht hat, je nach Menge und Größe der eingesetzten Mikrohohlkörper, eine Dicke von mindestens 150 µm, wobei die Dicke 300 µm oder größer sein kann.

Die Menge der erfindungsgemäß eingesetzten Mikrohohlkörper beträgt vorzugsweise 0,05 bis 10,0 Gew.%, insbesondere 0,3 bis 2,0 Gew.%, bezogen auf die Gesamtformulierung. Die Verwendung der Mikrohohlkörper in einer Beschichtungsmasse auf Basis von Monomeren und/oder Oligomeren von Estern der (Meth-)Acrylsäure mit C₁-C₈-Alkoholen erbringt dabei die Vorteile, daß die Beschichtungsmassen weit weniger anfällig gegen die Inhibierung der Härtung durch Luftsauerstoff werden als Beschichtungsmassen des Standes der Technik. Darüberhinaus führt die Verwendung von Mikrohohlkörpern in Beschichtungsmassen zu einer wesentlichen Verbesserung der Rutschfestigkeit auf daraus hergestellten Beschichtungen. Die Beschichtungsmassen der vorliegenden Erfindung härten aufgrund der signifikanten Verringerung der Polymerisationsinhibierung durch Sauerstoff schneller, vollständiger und gleichmäßiger aus als Beschichtungsmassen, die nur ein Wachs (z.B. Paraffin) als Mittel enthalten, das den Zutritt von Sauerstoff zur Beschichtungsmasse hemmen soll, und dies auch bei niedrigen Untergrund- und Umgebungstemperaturen wie etwa bei -5°C bis +5°C.

Zur Bildung einer Beschichtung unter Verwendung der Beschichtungsmassen wird die zu beschichtende Fläche, beispielsweise eine Beton-, Estrich-, Stahl-, Bitumen-, Asphalt- oder Keramikfläche, z.B. eine Fliesenfläche, vorteilhafterweise zunächst mit einer Grundierung versehen, die als haftvermittelnde und/oder korrosionsinhibierende und/oder oberflächenverfestigende Schicht dienen kann und beispielsweise bei einer Betonfläche bevorzugt auch für einen Porenverschluß sorgt. Solche Grundierungen sind aus dem Stand der Technik bekannt. Auf diese grundierte, gehärtete Fläche wird dann die erfindungsgemäße Beschichtungsmasse zusammen mit einem geeigneten Radikalbildner unter Verwendung üblicher Techniken aufgebracht und auspolymerisiert. Als Radikalbildner geeignet sind insbesondere Peroxidverbindungen, wie Benzoylperoxid, Cumolhydroperoxide und Methylethylketonperoxid. Es ist bevorzugt, daß die Radikalbildner die Polymerisation der erfindungsgemäßen Beschichtungsmasse bereits bei niedrigen Temperaturen auslösen, beispielsweise bereits bei -5°C bis +25°C. Nach dem Aufbringen der Beschichtungsmasse zusammen mit dem zuvor eingemischten Radikalbildner ist es bevorzugt, zur Entfernung von Sauerstoffspuren die Beschichtung in einer an sich bekannten Weise zu entlüften, beispielsweise unter Verwendung einer Stachelwalze.

Die vorliegende Erfindung kann beispielsweise in einem Zwei-Komponenten-Gebinde (Set) praktisch verwirklicht werden. Hierbei kann ein Teil des Gebindes beispielsweise aus dem flüssigen Bindemittel und den festen Füllstoffen, Pigmenten und Additiven bestehen, wohingegen der zweite Teil den Radikalbildner enthält. Möglich und bevorzugt ist auch ein Set, der einerseits das flüssige Bindemittel, wahlweise mit allen oder einem Teil der Zusatzstoffe, und andererseits den härter (Radikalbildner) und weitere Füllstoffe, Zusatzstoffe und Pigmente als festes, bevorzugt pulverförmiges Gemisch umfaßt. Die Mikrohohlkörper sind dabei in dem einen oder dem anderen, gegebenenfalls aber auch in beiden Teilgebinden enthalten. Vor der Applikation können diese Bestandteile jeweils in bestimmten Verhältnissen in üblicher Weise gemischt und frisch auf die zu beschichtende Fläche aufgebracht werden. Andere Gebindeformen sind denkbar.

Die Erfindung wird im folgenden anhand von Beispielen näher erläutert. In diesen Beispielen und Vergleichsbeispielen wird ein Qualitätstest für die Beschichtungsmassen der vorliegenden Erfindung und eines Vergleichsbeispiels dargestellt. Die nachfolgend aufgeführten Rezepturbeispiele wurden in jeweils 2 bzw. 5 mm Schichtdicke auf eine grundierte Betonplatte (40 x 30 cm) bei 20°C und bei 5°C appliziert, mit einer Stachelwalze entlüftet und sofort mit einer Metallglocke (Durchmesser = 15 cm) abgedeckt, so daß über der Untersuchungsfläche keinerlei Luftaustausch stattfand. Dieser Versuchsaufbau spiegelt einen Zustand wieder, der in der Vergangenheit besonders zu Problemen bei Betonbeschichtungen geführt hat.

### Beispiel 1 (Stand der Technik)

### Formulierung:

Verwendet wurde das Bindemittelharz 1 auf Basis von 70 Gew.% Methylmethacrylat, 27 Gew.% Ethylhexylacrylat, 1 Gew.% Paraffin, 1,8% polymeres Methylmethacrylat (Pulver) und 0,2% Dimethylanilin.

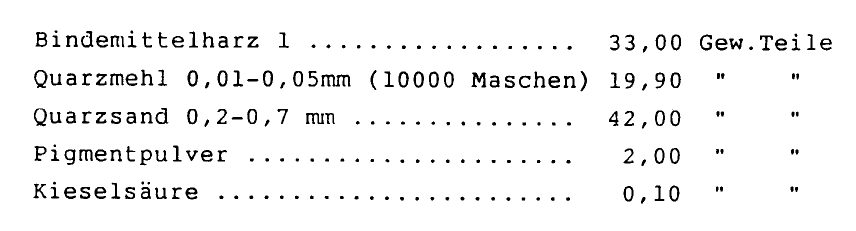

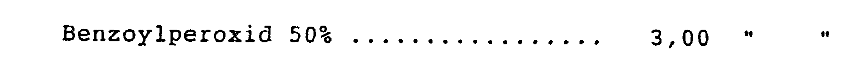

### Beispiel 2 (erfindungsgemäße Zusammensetzung; desgleichen alle folgenden Beispiele)

| | |
|---|---|
| Bindemittelharz 1 | 33,00 Gew.Teile |
| Quarzmehl 0,01 - 0,05 mm (10000 Maschen) | 19,30 Gew.Teile |
| Quarzsand 0,2-0,7 mm | 41,00 Gew.Teile |
| Pigmentpulver | 2,00 Gew.Teile |
| Kieselsäure | 0,10 Gew.Teile |
| Benzoylperoxid 50% | 4,00 Gew.Teile |
| Mikrohohlglaskugeln | 0,60 Gew.Teile |

### Beispiel 3

Verwendet wurde das Bindemittelharz 2 auf Basis von 80 Gew.% Methylmethacrylat, 18 Gew.% Ethylhexylacrylat, 1 Gew.% Paraffin, 0,8 Gew.% polymeres Methylmethacrylat (Pulver) und 0,2 Gew.% Dimethylanilin.

| | |
|---|---|
| Bindemittelharz 2 | 17,00 Gew.Teile |
| Schwerspat C 14 | 13,40 Gew.Teile |
| Quarzsand 0,1-0,4 mm | 32,00 Gew.Teile |
| Quarzsand 0,7-1,2 mm | 33,00 Gew.Teile |
| Kunststoffmikrohohlkugeln | 0,60 Gew.Teile |
| Pigmentpulver | 3,00 Gew.Teile |
| Cumolhydroperoxid 50% | 1,00 Gew.Teile |

### Beispiel 4

Verwendet wurde das Bindemittelharz 3 auf Basis von 65 Gew.% Methylmethacrylat, 32 Gew.% Ethylhexylacrylat, 1 Gew.% Paraffin, 1,8 Gew.% polymeres Methylmethacrylat (Pulver) und 0,2 Gew.% Dimethylanilin.

| | |
|---|---|
| Bindemittelharz 3 | 50,00 Gew.Teile |
| Kreide | 43,20 Gew.Teile |
| Pigmentpulver | 4,00 Gew.Teile |
| Methylethylketonperoxid 50% | 2,00 Gew.Teile |
| Mikrohohlglaskugeln | 0,80 Gew.Teile |

### Beispiel 5

Verwendet wurde das Bindemittelharz 4 auf Basis von 60 Gew.% Methylmethacrylat, 37 Gew.% Ethylhexylacrylat, 1 Gew.% Paraffin, 1,8 Gew.% polymeres Methylmethacrylat (Pulver) und 0,2 Gew.% Dimethylanilin.

| | |
|---|---|
| Bindemittelharz 4 | 25,00 Gew.Teile |
| Quarzsand 0,1-0,4 mm | 11,20 Gew.Teile |
| Farbsand 0,7-1,2 mm | 60,00 Gew.Teile |
| Al/Si-Hohlkörper ("Eccospheres" (Durchmesser ca. 150 µm) | 0,80 Gew.Teile |
| Cumolhydroperoxid 50% | 3,00 Gew.Teile |

### Beispiel 6

Verwendet wurde Bindemittelharz 2 (siehe Beispiel 3).

| | |
|---|---|
| Bindemittelharz 2 | 30,00 Gew.Teile |
| Calcit | 19,00 Gew.Teile |
| Quarzsand 0,3-0,8 mm | 40,00 Gew.Teile |
| Al/Si-Hohlkörper ("Eccospheres") (Durchmesser ca. 150 µm) | 1,00 Gew.Teile |
| Pigmentpulver | 5,00 Gew.Teile |
| Benzoylperoxid 50% | 5,00 Gew.Teile |

### Beispiel 7

Verwendet wurde Bindemittelharz 4 (siehe Beispiel 5).

| | |
|---|---|
| Bindemittelharz 4 | 40,00 Gew.Teile |
| Talkum | 15,00 Gew.Teile |
| Quarzsand HS 20 | 34,00 Gew.Teile |
| Pigmentpulver | 6,00 Gew.Teile |
| Kunststoffmikrohohlkugeln | 1,00 Gew.Teile |
| Benzoylperoxid 50% | 4,00 Gew.Teile |

Die Formulierungen der Beispiele 1 bis 7 werden jeweils mit einem Korbrührer auf einer langsam laufenden Bohrmaschine (ca. 400 U/min) gemischt, sofort auf die Betonfläche aufgetragen und mit der Stachelwalze entlüftet. Nach 4 Stunden wurde die Metallglocke mechanisch entfernt und eine Beurteilung der Oberfläche der Beschichtung vorgenommen. Bewertungskriterien bei der Beurteilung der einzelnen Versuche waren die Einheitlichkeit des Aussehens und die Klebrigkeit der Oberfläche. Wenn die Beschichtungsoberfläche ein einheitliches Bild ergab, erhielt der Versuch die Bewertung (+), wenn sich ein uneinheitliches Bild ergab, erhielt der Versuch die Bewertung (-). Wenn sich bei der Auswertung eine klebrige Oberfläche zeigte, wurde dies mit einem "k", bei klebfreier Oberfläche mit "n" angegeben.

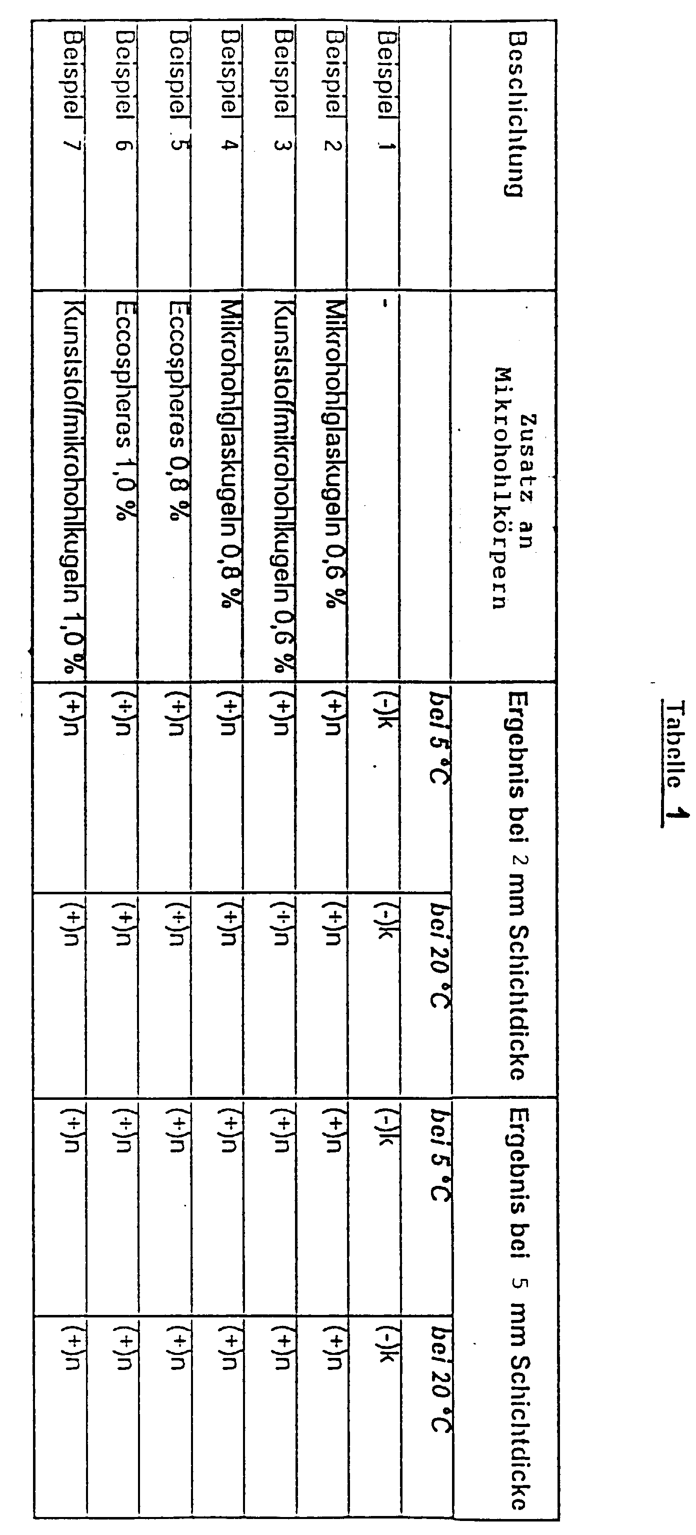

Die in der vorstehenden Tabelle 1 aufgeführten Ergebnisse zeigen, daß die erfindungsgemäßen Formulierungen, die Mikrohohlkörper enthalten, selbst unter ungünstigen Bedingungen einheitliche kleb- und störungsfreie Oberflächen aufweisen, im Gegensatz zu der Formulierung des Beispiels 1 (Stand der Technik), die ohne Mikrohohlkörper ausgerüstet war.

### Beispiel 8 (Test auf Rutschfestigkeit)

Eine erfindungsgemäße Beschichtungsmasse (Formulierung nach Beispiel 6) wurde nach der in den vorhergehenden Beispielen beschriebenen Methode auf eine Prüffläche in den Abmessungen 100 cm x 50 cm aufgetragen. Die Prüffläche war ein grundierter Beton, die Temperatur im Prüfraum betrug 23 +/- 5°C. Die Prüfplatte wird auf einer Vorrichtung angebracht, die den Neigungswinkel des Prüfbelages, vom waagrechten Zustand ausgehend, mit einer Geschwindigkeit von ca. 1° je Sekunde erhöht. Auf diese Weise wird eine schiefe Ebene mit zunehmendem Neigungswinkel zur Verfügung gestellt. Eine Prüfperson geht mit abwärts gerichteter Blickrichtung in Schritten einer halben Fußlänge vorwärts und rückwärts auf dem zu prüfenden Bodenbelag. Der Neigungswinkel, bei dem die Prüfperson die Grenze des sicheren Gehens erreicht, wird durch mehrmaliges Auf- und Abfahren um den kritischen Bereich festgestellt. Dabei werden Dreifachmessungen vorgenommen und ein Mittelwert gebildet. Ferner werden diese Messungen von zwei verschiedenen Prüfpersonen durchgeführt. Die Prüfpersonen tragen Sicherheitsschuhe mit einer Schuhsohle auf Nitrilkautschukbasis, die der Shore-A-Härte 73 +/- 5 nach DIN 53505 entspricht. Der arithmetische Gesamtmittelwert aus sechs Meßergebnissen erlaubt eine Klassifizierung gemäß der folgenden Tabelle 2:

**Tabelle 2**

| Gesamtmittelwerte | Bewertungsgruppe |
|---|---|
| 10 und weniger | R ≤9 |
| mehr als 10 bis 19° | R 10 |
| mehr als 19° bis 27° | R 11 |
| mehr als 27° bis 35° | R 12 |
| mehr als 35° | R 13 |

Die Rutschfestigkeit eines Bodenbelags ist also um so besser, je höher die Bewertungsgruppe ist. Hierbei zeigte sich mit der erfindungsgemäßen Formulierung des Beispiels 6 eine Rutschfestigkeit, die der Bewertungsgruppe R 11 entspricht, wohingegen mit einer Formulierung ohne Mikrohohlkörper (Beispiel 1) nur die Rutschfestigkeitsklasse R 9 erreicht wurde. Aus diesen Ergebnissen ergibt sich, daß die erfindungsgemäßen Bodenbeläge eine höhere Rutschfestigkeit aufweisen als die Bodenbeläge des Vergleichsbeispiels.

## Patentansprüche

1. Beschichtungsmassen auf Basis von Monomeren und/oder Oligomeren von Estern der (Meth-)Acrylsäure mit C₁ bis C₈-Alkoholen, unter Zusatz von Füllstoffen, Pigmenten und/oder Additiven, dadurch gekennzeichnet, daß sie zusätzlich Mikrohohlkörper einer durchschnittlichen Teilchengröße von 10 bis 200 Mikrometern in mindestens einer Menge enthalten, die zur Bildung einer Schicht mit einer Mindestdicke von 150 Mikrometern an der Oberfläche einer aus der Beschichtungsmasse gebildeten Beschichtung ausreicht.

2. Beschichtungsmassen nach Anspruch 1, dadurch gekennzeichnet, daß die Mikrohohlkörper ausgewählt sind aus Glashohlkugeln, Kunststoffmikrohohlkugeln, gefüllten Kunststoffhohlkörpern, Borsilikathohlkörpern, Aluminiumsilikathohlkörpern, Glashohlkugeln mit gefüllten Kunststoffhohlkugeln und deren Mischungen.

3. Beschichtungsmassen nach Ansprüchen 1 und 2, dadurch gekennzeichnet, daß die Mikrohohlkörper in einer Menge von 0,05 bis 10,0 Gew.-%, bezogen auf die Gesamtformulierung, vorliegen.

4. Beschichtungsmassen nach Anspruch 3 dadurch gekennzeichnet, daß die Mikrohohlkörper in einer Menge von 0,3 bis 2,0 Gew.-%, bezogen auf die Gesamtformulierung, vorliegen.

5. Beschichtungsmassen nach einem oder mehreren der vorhergehenden Ansprüche, dadurch gekennzeichnet, daß sie 10-50 Gew.% (Meth-)Acrylatmonomere bzw. -oligomere, 90-50 Gew.% Füllstoffe, Pigmente und andere Zusatzstoffe, sowie 0,05 bis 10 Gew.% Mikrohohlkörper enthalten.

6. Beschichtungsmassen nach Anspruch 2, dadurch gekennzeichnet, daß die Mikrohohlkörper ausgewählt sind aus Borsilikat- und Aluminiumsilikathohlkugeln.

7. Verfahren zur Beschichtung einer Beton-, Keramik-, Estrich-, Asphalt-, Bitumen- oder Stahlfläche, dadurch gekennzeichnet, daß man auf diese Fläche (a) eine übliche Grundierung aufbringt und aushärtet und anschließend (b) eine Beschichtungsmasse gemäß einem oder mehreren der vorhergehenden Ansprüche zusammen mit einem geeigneten Radikalbildner aufbringt und aushärten läßt.

8. Verwendung von Mikrohohlkörpern zur Herstellung einer vollständig aushärtbaren Beschichtungsmasse auf Basis von Monomeren und/oder Oligomeren von Estern der (Meth-)Acrylsäure mit C₁ bis C₈-Alkoholen.

9. Verwendung von Mikrohohlkörpern zur Verbesserung der Polymerisierbarkeit einer Beschichtungsmasse auf Basis von Monomeren und/oder Oligomeren von Estern der (Meth-)Acrylsäure mit C₁ bis C₈-Alkoholen.

10. Verwendung von Mikrohohlkörpern zur Erhöhung der Rutschfestigkeit einer Beschichtung aus einer Beschichtungsmasse auf Basis von Monomeren und/oder Oligomeren von Estern der (Meth-)Acrylsäure mit C₁ bis C₈-Alkoholen.

## Claims

1. Coating compositions based on monomers and/or oligomers of esters of (meth)acrylic acid with C₁ to C₈ alcohols, with addition of fillers, pigments and/or additives, characterised in that they additionally contain micro hollow bodies of an average particle size of 10 to 200 micrometres in at least a quantity which is adequate to form a layer having a minimum thickness of 150 micrometres on the surface of a coating formed from the coating composition.

2. Coating compositions according to claim 1, characterised in that the micro hollow bodies are selected from glass hollow spheres, plastic micro hollow spheres, filled plastic hollow bodies, borosilicate hollow bodies, aluminium silicate hollow bodies, glass hollow spheres with filled plastic hollow spheres and mixtures thereof.

3. Coating compositions according to claims 1 and 2, characterised in that the micro hollow bodies are present in a quantity of 0.05 to 10.0 wt.%, based on the total formulation.

4. Coating compositions according to claim 3, characterised in that the micro hollow bodies are present in a quantity of 0.3 to 2.0 wt.%, based on the total formulation.

5. Coating compositions according to one or more of the preceding claims, characterised in that they contain 10-50 wt.% of (meth)acrylate monomers or oligomers, 90-50 wt.% of fillers, pigments and other additives, as well as 0.05 to 10 wt.% of micro hollow bodies.

6. Coating compositions according to claim 2, characterised in that the micro hollow bodies are selected from borosilicate and aluminium silicate hollow spheres.

7. Process for coating a concrete, ceramic, plaster, asphalt, bitumen or steel surface, characterised in that a conventional primer is applied and cured on this surface (a) and then (b) a coating composition according to one or more of the preceding claims is applied together with a suitable free-radical former and allowed to cure.

8. Use of micro hollow bodies for producing a completely curable coating composition based on monomers and/or oligomers of esters of (meth)acrylic acid with C₁ to C₈ alcohols.

9. Use of micro hollow bodies to improve the polymerisability of a coating composition based on monomers and/or oligomers of esters of (meth)acrylic acid with C₁ to C₈ alcohols.

10. Use of micro hollow bodies to increase the slip resistance of a coating made from a coating composition based on monomers and/or oligomers of esters of (meth)acrylic acid with C₁ to C₈ alcohols.

## Revendications

1. Masses d'enduction à base de monomères et/ou d'oligomères d'esters de l'acide (méth-)acrylique avec des alcools en C₁ à C₈, avec addition de charges, de pigments et/ou d'additifs, caractérisées en ce qu'elles contiennent en outre des microcorps creux d'une taille de particules moyenne de 10 à 200 µm dans une quantité au moins égale à celle qui suffit pour la formation d'une couche ayant une épaisseur minima de 150 µm sur la surface d'une enduction formée à partir de la masse d'enduction.

2. Masses d'enduction selon la revendication 1, caractérisées en ce que les microcorps creux sont choisis parmi des sphères de verre creuses, des microsphères de matière plastique creuses, des corps creux de matière plastique chargés, des corps creux de borosilicate, des corps creux de silicate d'aluminium, des sphères creuses de verre avec des sphères creuses de matière plastique chargées et leurs mélanges.

3. Masses d'enduction selon les revendications 1 et 2, caractérisées en ce que les microcorps creux sont présents dans une quantité de 0,05 à 10,0 % en poids par rapport à la formule totale.

4. Masses d'enduction selon la revendication 3, caractérisées en ce que les microcorps creux sont présents dans une quantité de 0,3 à 2,0 % en poids par rapport à la formule totale.

5. Masses d'enduction selon une ou plusieurs des revendications précédentes, caractérisées en ce qu'elles contiennent 10 à 50 % en poids de (méth-)acrylates monomères ou -oligomères, 90 à 50 % en poids de charges, de pigments et d'autres additifs, et 0,05 à 10 % en poids de microcorps creux.

6. Masses d'enduction selon la revendication 2, caractérisées en ce que les microcorps creux sont choisis parmi des sphères creuses de borosilicate et de silicate d'aluminium.

7. Procédé d'enduction d'une surface de béton, de céramique, de chape, d'asphalte, de bitume ou d'acier, caractérisé en ce qu'on applique et fait durcir sur cette surface (a) une couche de fond habituelle, puis (b) on applique et fait durcir une masse d'enduction conforme à une ou plusieurs des revendications précédentes, avec un agent de formation de radicaux approprié.

8. Utilisation de microcorps creux pour la préparation d'une masse d'enduction durcissable complètement à base de monomères et/ou d'oligomères d'esters de l'acide (méth-)acrylique avec des alcools en C₁ à C₈.

9. Utilisation de microcorps creux pour l'amélioration de l'aptitude à la polymérisation d'une masse d'enduction à base de monomères et/ou d'oligomères d'esters de l'acide (méth-)acrylique avec des alcools en C₁ à C₈.

10. Utilisation de microcorps creux pour augmenter la résistance au glissement d'une enduction obtenue à partir d'une masse d'enduction à base de monomères et/ou d'oligomères d'esters de l'acide (méth-)acrylique avec des alcools en C₁ à C₈.
